# EUROPÄISCHE PATENTSCHRIFT

(11) **EP 2 095 903 B1**
(45) Veröffentlichungstag und Bekanntmachung des Hinweises auf die Patenterteilung: **18.04.2012**
(21) Anmeldenummer: 09002150.2
(22) Anmeldetag: 16.02.2009
(51) Int. Cl.: B23K 26/03, B23K 26/08, B23K 26/00, A47G 19/22, B24B 9/12, C03B 11/00, C03B 19/00, C03B 29/02, C03B 32/00

(54) **Verfahren und Vorrichtung zum Entfernen der Glasformnähte mit Polieren der Nahtstellen unter Verwendung eines Laserstrahles**
Method of and device for removing glass forming joints by polishing the joint locations using a laser beam
Procédé et dispositif d'enlèvement des joints de formage d'un verre à l'aide d'un polissage des joints à l'aide d'un faisceau laser

(30) Priorität: 29.02.2008 DE 102008011808
(43) Veröffentlichungstag der Anmeldung: 02.09.2009
(73) Patentinhaber: Zwiesel Kristallglas AG, 94227 Zwiesel (DE)
(72) Erfinder: Lesche, Klaus, 94259 Kirchberg (DE)
(74) Vertreter: Müller-Boré & Partner Patentanwälte

(56) Entgegenhaltungen:
- DE-A1-102004 033 981
- GB-A- 2 078 621
- JP-A- 8 143 321
- US-A- 4 447 991
- US-A- 5 653 900
- US-A1- 2006 102 608
- US-B1- 6 518 541

## Beschreibung

Die Erfindung betrifft ein Verfahren und eine Vorrichtung zum Polieren von Glasprodukte gemäß dem Oberbegriff der Ansprüche 1 und 8 (siehe, z.B., DE 10 2004 033 981 A1).

Die maschinelle Herstellung von Glasprodukten, wie beispielsweise Trinkgläsern erfolgt heutzutage überwiegend durch Pressen. Dabei wird Glasschmelze mit einem Stempel in eine Preßform gepreßt. Aufgrund von Trennstellen einzelner Formteile und dem Preßstempel entstehen je nach Herstellungsverfahren unterschiedliche Nähte an dem fertigen Glasprodukt, wie beispielsweise eine sogenannte Facettennaht, Ringnaht, Ansetznaht, Stielnaht oder Bodennaht. Insbesondere eine Boden- und Stielnaht eines Kelchglases ist auch von einem Laien gut zu erkennen und erweckt den Eindruck einer schlechten Qualität des Glasprodukts. Deshalb werden die durch das Pressen erzeugten Nähte mittels Gasbrenner erwärmt und geglättet. Dies ist jedoch ein schwer zu beherrschender und energieintensiver Prozeß. Deshalb besteht ein Bedarf für eine Verbesserung des Glättungsprozesses bzw. Poliervorgangs von gepreßten Glasprodukten.

US 2006/102608 A1 beschreibt eine Laser-Bearbeitungsmaschine, die mehrere, auf einer Arbeitsfläche befindlichen Arbeitsstücke mit einem Laser bearbeiten kann, auf der Grundlage von NC-Daten und den Daten einer Bilderfassungs-Vorrichtung.

DE 10 2004 033 981 A1 beschreibt ein Verfahren und eine Vorrichtung zur Glättungsbehandlung von Trinkgläsern, bei dem ein Hauptkörper gegenüber dem zu bearbeitenden Glasform vertikal beweglich ist und einen Zentrierflansch aufweist zum in Eingriff treten mit einer an der Glasform angebrachten Ringzentrierung; ein Drehkörper, der an dem Hauptkörper drehbar gelagert ist und zumindest eine Wärmequelle aufweist, die durch die Drehung des Drehkörpers auf einer Kreisbahn in Gegenüberlage der an dem Hauptkörper drehbar gelagert ist und zumindest eine Wärmequelle aufweist, die durch die Drehung des Drehkörpers auf einer Kreisbahn in Gegenüberlage zu dem Glasprodukt drehbar ist bringt durch die Wärmequelle das Glasprodukt zumindest teilweise zum Schmelzen, um an dem Glasprodukt eine Glättungsbehandlung durchzuführen.

US 6 518 541 B1 beschreibt ein System zum Regeln des Lasers in einem Direct Metal Deposition (DMD) - Systems, bei dem durch optische Überwachung ein Rückmeldesignal erzeugt wird, mit dessen Hilfe der Arbeitszyklus des Lasers geregelt wird.

US 5 653 900 beschreibt ein Verfahren zum Markieren eines bewegten Gegenstandes mittels eines Lasers unter Zuhilfenahme der gemessenen Geschwindigkeit des Gegenstands.

Die Aufgabe der Erfindung besteht somit in der Schaffung eines verbesserten Polierverfahrens, mit Hilfe dessen durch Pressen erzeugte Formnähte an Glasprodukten im wesentlichen unsichtbar gemacht werden können und mit dem eine Vielzahl von Glasprodukten maschinell poliert werden kann. Des weiteren soll eine korrespondierende Vorrichtung zum Polieren von Glasprodukten sowie ein damit poliertes Glasprodukt geschaffen werden.

Diese Aufgabe wird durch ein Verfahren und eine Vorrichtung mit den Merkmalen der unabhängigen Ansprüche 1 und 8 gelöst. Vorteilhafte Weiterbildungen der Erfindung sind in den abhängigen Ansprüchen definiert.

Indem die Bahn für einen Laserstrahl auf der Grundlage der Lage des Glasprodukts und der vorgegebenen Kontur des Glasprodukts berechnet wird, kann der Laserstrahl exakt entlang der Formnaht geführt werden, um die Formnaht zu verschmelzen und im wesentlichen unsichtbar zu machen. Da der Laser eine hohe Energiedichte besitzt, kann die Erwärmung und Verschmelzung der Formnaht gezielt in ganz bestimmten Bereichen des Glasprodukts erfolgen. Eine unnötige Erwärmung benachbarter Bereiche des Glasprodukts wird weitgehend vermieden. Dadurch wird mit einem minimalen Energieaufwand eine hervorragende Glättung der Formnaht erzielt.

Erfindungsgemäß werden die Glasprodukte auf einem Transportband plaziert bzw. positioniert und transportiert und das Transportband wird weiter bevorzugt kontinuierlich bewegt, um während der Bewegung des Transportbands eine Vielzahl von auf dem Transportband angeordneten Glasprodukte zu polieren.

Indem der Poliervorgang des Glasprodukts während der kontinuierlichen Bewegung des Transportbands erfolgt, kann eine hohe Stückzahl pro Zeiteinheit bearbeitet werden. Eine diskontinuierliche Bearbeitung wird vermieden, was sich positiv auf vorhergehende und nachfolgende Bearbeitungsstationen des Glasprodukts auswirkt. In anderen Worten können eine Vielzahl von gepreßten Gläsern, die von einer Preßstation zu der Polierstation gefördert werden, kontinuierlich poliert werden, um kontinuierlich weiter transportiert zu werden, beispielsweise zu einer Abkühl- und/oder Verpackungsstation.

Vorzugsweise beinhaltet das Verfahren des weiteren den Schritt des Ausrichtens der Glasprodukte auf dem Transportband derart, dass ein zu polierender Bereich des Glasprodukts in einer horizontalen Ebene in einem von 0° und 180° verschiedenen Winkel, vorzugsweise im wesentlichen rechtwinklig bzw. normal bzw. senkrecht in Bezug auf eine Transportrichtung des Transportbands angeordnet wird.

Indem die Glasprodukte auf dem Transportband derart ausgerichtet werden, daß der zu polierende Bereich, d.h. eine Stielnaht und eine Bodennaht rechtwinklig bzw. quer zu der Transportrichtung des Transportbands ausgerichtet werden, ist eine hervorragende Zugänglichkeit eines Laserstrahls zu dem zu polierenden Bereich des Glasprodukts gewährleistet. Der Laserstrahl kann dabei den Poliervorgang beginnen bevor das Glasprodukt an der Laservorrichtung vorbeitritt und kann auch nach dem Vorbeitreten an der Laservorrichtung durch den Laserstrahl weiter bearbeitet werden. In anderen Worten wird der Laserstrahl von der Laservorrichtung anfänglich mit einem im wesentlichen spitzen Winkel auf die Glasformnaht gerichtet, während der Bewegung des Transportbands und demgemäß der Bewegung des Glasprodukts zu der Laservorrichtung hin, wird der Bearbeitungswinkel des Laserstrahls immer stumpfer, um schließlich einen rechten Winkel (90°) zu erreichen. Wenn das Glasprodukt aufgrund der Bewegung des Transportbands schließlich von der Laservorrichtung weg bewegt wird, geht der rechte Winkel wiederum von zunächst einem stumpfen Winkel in einen spitzen Winkel über. Das heißt, der Laserstrahl folgt der Bewegung des Glasprodukts auf dem Transportband. Somit ist ein Anhalten oder Verzögern des Transportbands nicht notwendig. Das Glasprodukt wird vielmehr während der kontinuierlichen Bewegung des Transportbands durch den Laserstrahl bearbeitet.

Weiter bevorzugt umfaßt das Verfahren des weiteren den Schritt des Ladens der Kontur des Glasprodukts in einem Rechner bzw. Computer als eine CAD-Datei (Computer Aided Design).

Vorzugsweise umfaßt der Schritt des Erfassens der Lage des Glasprodukts des weiteren das Erfassen von mindestens zwei vorgegebenen Linien an dem Glasprodukt.

Indem die Lage des Glasprodukts durch mindestens zwei vorgegebene Linien an dem Glasprodukt vorzugsweise als CAD-Datei gespeichert und erfaßt wird, kann die Lage des Glasprodukts auf dem Transportband mit hoher Präzision erfaßt werden. Zusätzlich oder alternativ kann das Glasprodukt dabei beispielsweise durch einen Roboterarm auf dem Transportband zumindest innerhalb eines vorgegebenen Bereichs ausgerichtet werden.

Weiter bevorzugt wird die Lage des Glasprodukts mittels mindestens eines optischen Sensors, eines Laserscanners und/oder einer CCD-Kamera erfaßt.

Weiter bevorzugt umfaßt das Verfahren des weiteren den Schritt des Bearbeitens des Glasprodukts mit einem Laser von zwei im wesentlichen gegenüberliegenden Seiten im wesentlichen quer zur Transportrichtung des Transportbands.

Vorzugsweise umfaßt das Verfahren des weiteren die Schritte:
Anordnen eines Stielglases auf dem Transportband mit einer Kappe des Stielglases nach unten; und
Bearbeiten einer Stielnaht und/oder einer Bodennaht des Stielglases mittels Laser.

Indem das Stielglas mit seiner Kappe auf dem Transportband angeordnet wird, können die vorgegebenen Linien an dem Glasboden besonders gut erfaßt werden, wenn beispielsweise der vorgenannte optische Sensor oberhalb des Transportbands angeordnet wird, vorzugsweise derart, dass das Glasprodukt unterhalb des optischen Sensors vorbeitritt. Darüber hinaus steht das Glas sehr stabil mit seiner Kappe auf dem Transportband. Darüber hinaus erfolgt kein zusätzlicher Wärmeentzug an den heißen Gläsern durch Aufnahmen oder dergleichen. Mit diesem Verfahren können je nach Glaskontur bis zu 60 Gläser pro Minute auf dem Transportband mittels Laser poliert werden.

Weiter bevorzugt ist in der Vorrichtung mindestens ein optischer Sensor, ein Laserscanner und/oder eine CCD-Kamera als Lageerfassungseinrichtung zum Erfassen der Lage des Glasprodukts vorgesehen.

Vorzugsweise sind zwei Lasereinrichtungen an im wesentlichen gegenüberliegenden Seiten im wesentlichen quer zur Transportrichtung des Transportbands angeordnet, um das Glasprodukt gleichzeitig von zwei Seiten zu bearbeiten.

Wenn des weiteren zwei Laservorrichtungen an zwei im wesentlichen gegenüberliegenden Seiten der Vorrichtung angeordnet sind, kann das Glasprodukt von zwei Seiten gleichzeitig bearbeitet werden. Dies ist insbesondere vorteilhaft zum Bearbeiten einer Stiel- und Bodennaht, die im wesentlichen an zwei entgegengesetzten Seiten des Glasbodens und des Glasstiels entstehen. Aufgrund der kontinuierlichen Bewegung der Glasprodukte ohne zusätzliche Aufnahmen auf dem Transportband vorzusehen, ist der Aufbau einer entsprechenden Vorrichtung sehr einfach und es entstehen nur geringe Investitionskosten. Darüber hinaus ist die Vorrichtung aufgrund des einfachen Aufbaus verhältnismäßig klein zu dimensionieren, um nur einen geringen Raum in einer Fertigungshalle zu beanspruchen.

Nachfolgend wird ein beispielhaftes Ausführungsbeispiel unter Bezugnahme auf die beigefügten Zeichnungen näher erläutert.

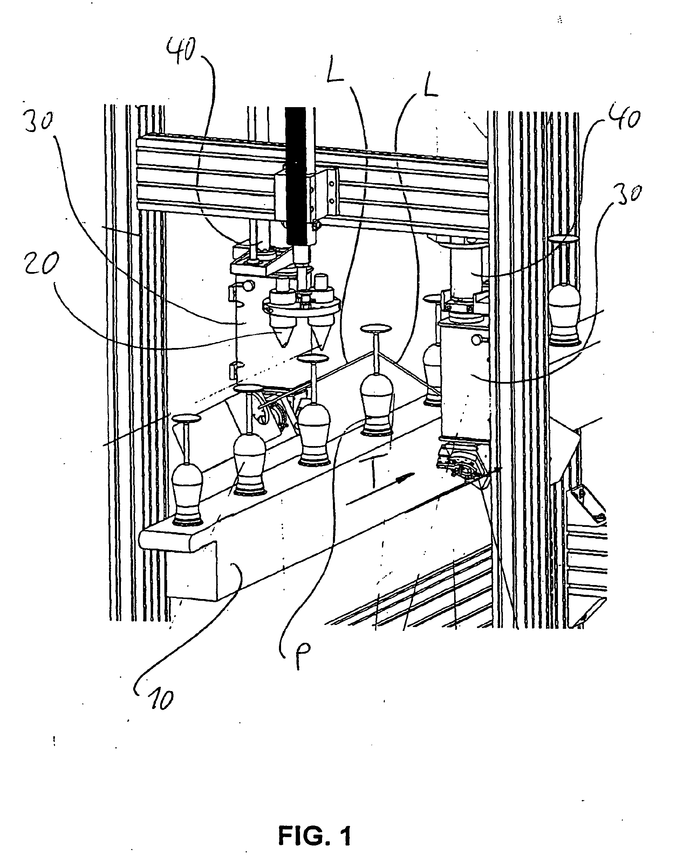

Dabei zeigt Figur 1 eine perspektivische Ansicht der Vorrichtung zum Polieren von Glasprodukten sowie eines Transportbands, auf dem Glasprodukte befördert werden.
Figur 2 zeigt eine Seitenansicht der Vorrichtung von Figur 1.
Figur 3 zeigt eine Vorderansicht der Vorrichtung von Figur 1.
Figur 4 zeigt ein Trinkglas als beispielhaftes Glasprodukt, an dem eine Laserpolitur durchzuführen ist.
Figur 5 zeigt eine zweiteilige Preßform zum Pressen eines Trinkglases.
Figur 6 zeigt eine dreiteilige Preßform zum Pressen eines Bodens mit Stiel für ein Trinkglas.

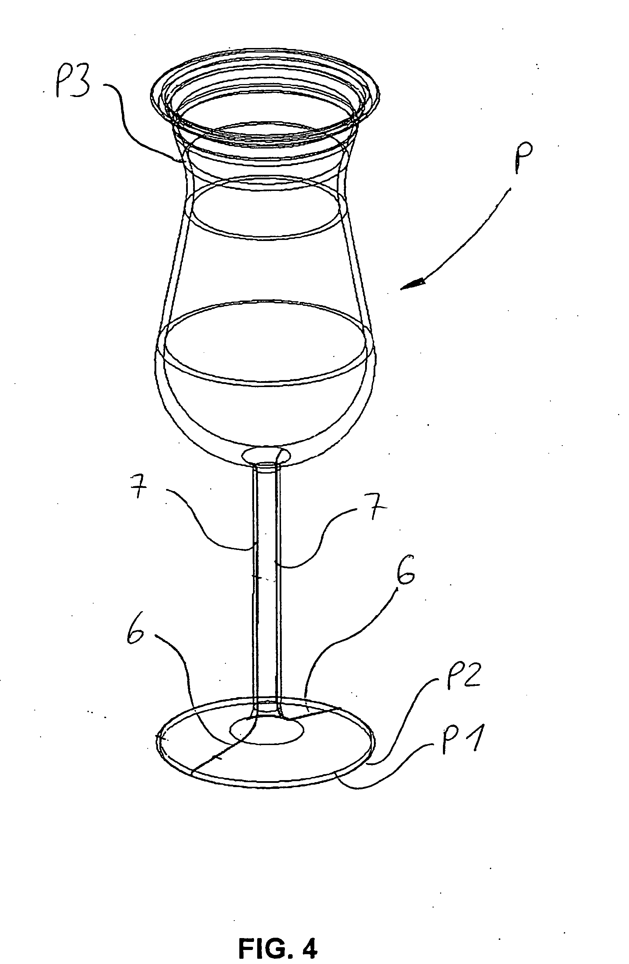

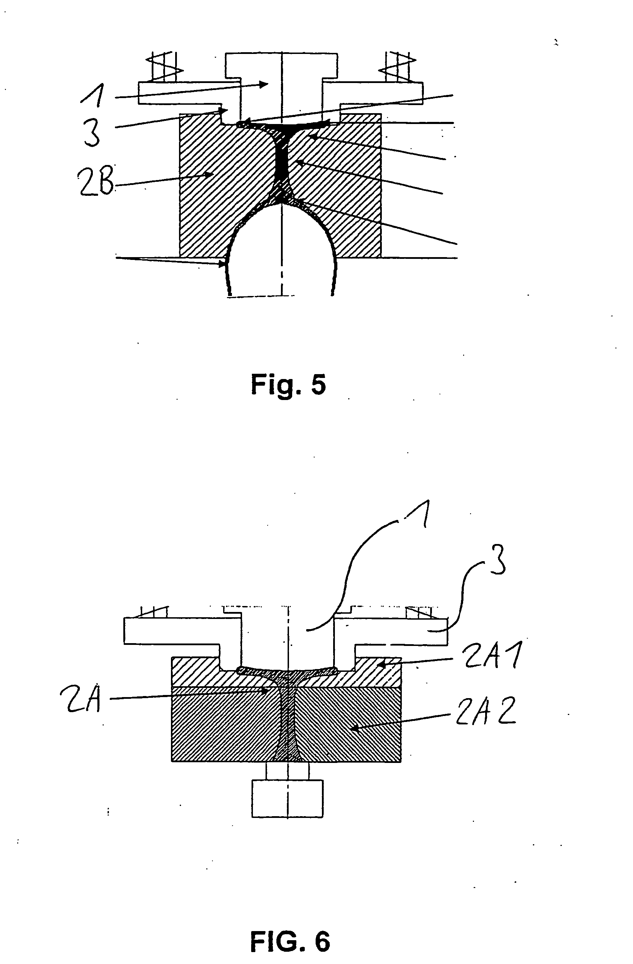

Wie in Figur 5 gezeigt ist, wird ein Glas bei einem Preßvorgang mittels eines Stempels 1 in die Glasform 2B gepreßt. Diese Form 2B ist zweiteilig, um das Glas nach dem Pressen aus der Form 2B entnehmen zu können. Dabei entstehen aufgrund der Zweiteiligkeit der Form 2B eine Bodennaht 6 und eine Stielnaht 7, wie in Figur 4 gezeigt ist. Figur 6 zeigt eine dreiteilige Form 2A1, 2A2 zum Verhindern der Bodennaht 6. Dabei ist der obere Teil der Form 2A1 einteilig und der Boden mit Stiel wird nach dem Pressen nach oben aus der Form 2A1 entnommen nachdem die zweiteilige Form 2A2 getrennt wurde. Hierdurch kann die Bodennaht 6 verhindert werden, jedoch kann aufgrund der Zweiteiligkeit des zweiten Teils der Form 2A2 die Stielnaht 7 nicht verhindert werden. Darüber hinaus muß ein weiterer Preßvorgang oder Blasvorgang durchgeführt werden, um den Stiel mit Boden auf ein Glasoberteil, den sogenannten Kelch, aufzupressen oder aufzublasen. Dabei entsteht eine weitere Naht, die sogenannte Ansetznaht.

Das erfindungsgemäße Verfahren dient der Politur bzw. Glättung der Bodennaht 6 und der Stielnaht 7.

Wie in Figur 1 gezeigt ist, werden die gepreßten Glasprodukte P auf ein Transportband T gesetzt ohne daß das Transportband mit einer Aufnahmevorrichtung, einem Greifer, einem Aufnahmetöpfchen oder dergleichen versehen ist. Dies bietet den Vorteil, daß die noch in dem Glasprodukt P befindliche Wärme nicht so schnell an umgebende Komponenten abgegeben wird. In anderen Worten bleibt das Glasprodukt P während des Transports auf dem Transportband T noch sehr heiß.

Das Transportband läuft an einer oder vorzugsweise einem Paar Lasereinrichtungen 30, 30 vorbei. Die paarweise angeordneten Lasereinrichtungen 30, 30 sind dabei vorzugsweise auf zwei gegenüberliegenden Seiten im wesentlichen rechtwinklig zu einer Transportrichtung des Transportbands T angeordnet. Die Lasereinrichtungen 30, 30 können jedoch auch in der Transportrichtung T voneinander versetzt angeordnet werden. Darüber hinaus sind die Lasereinrichtungen 30, 30 mit entsprechenden (nicht gezeigten) verkippbaren bzw. beweglichen Spiegeln versehen, um einen Laserstrahl L während der Bewegung des Glasprodukts P auf dem Transportband T weiter zu führen und den Laserstrahl in einer Höhenrichtung des Glasprodukts P zu bewegen.

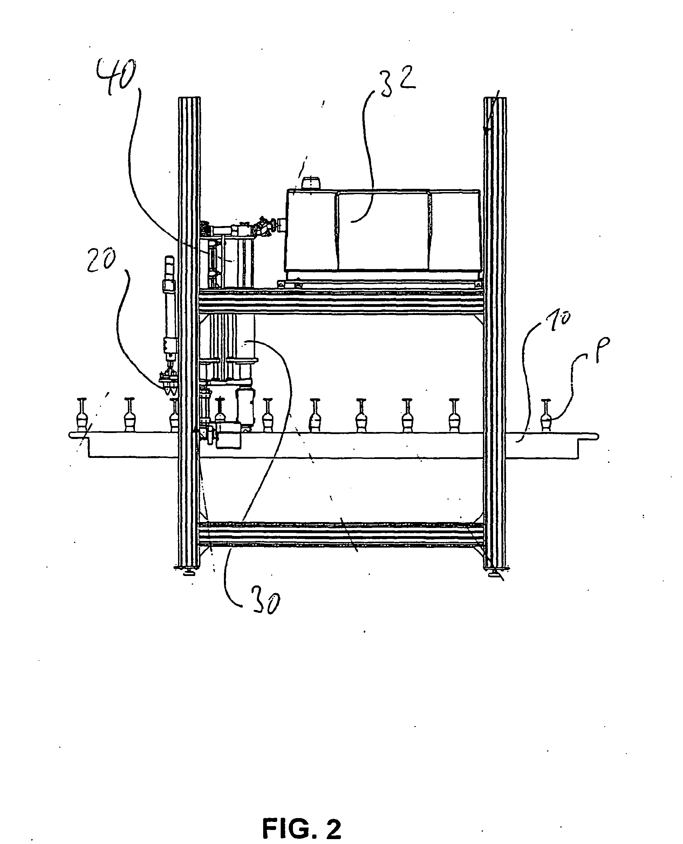

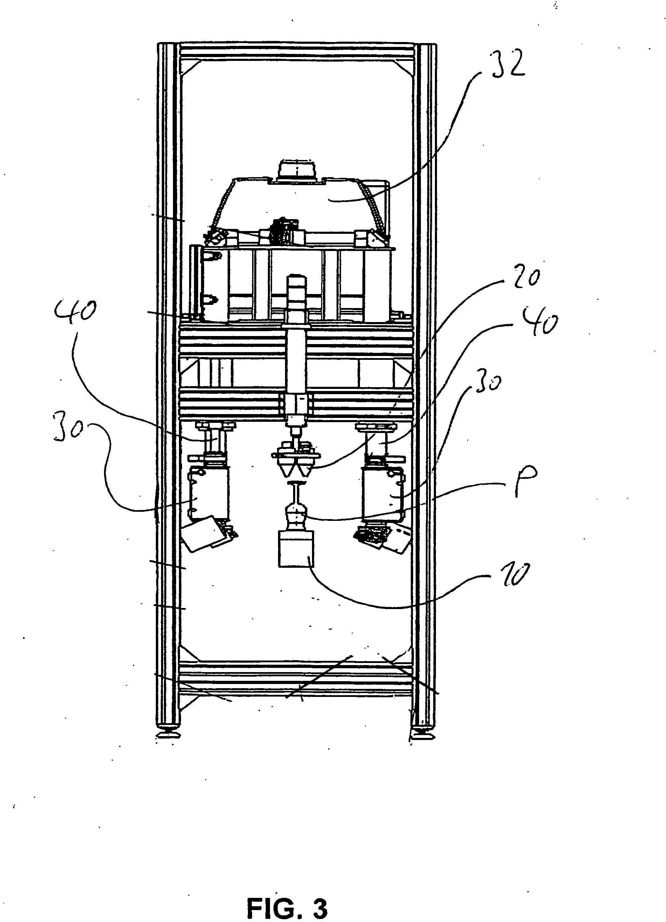

In anderen Worten ist der Laserstrahl L sowohl in der horizontalen Richtung in Figur 1 als auch in der vertikalen Richtung beweglich. Zum Erzeugen des Laserstrahls ist die Vorrichtung des weiteren, wie in den Figuren 2 und 3 gezeigt ist, mit einem CO₂ Laser 32 ausgestattet, der die Laserstrahlen L, L für beide Lasereinrichtungen 30 erzeugt.

Des weiteren ist die Vorrichtung mit einer Lageerfassungseinrichtung 20 versehen, die eine Lage bzw. Position der Glasprodukte P auf dem Transportband 10 erfassen kann. Diese Lageerfassungseinrichtung 20 kann ein optischer Sensor, eine CCD Kamera, eine Lasereinrichtung, ein Scanner oder dergleichen sein. Des weiteren ist eine Bewegungseinrichtung 40 vorgesehen, um beim Umbau der Vorrichtung bzw. Glasbearbeitungslinie diese an unterschiedliche Glashöhen anzupassen, indem mit Hilfe der Bewegungseinrichtung 40 die Lageerfassungseinrichtung 20 bzw. Scannereinheit verstellt bzw. versetzt wird.

Vorzugsweise erfaßt diese optische Lageerfassungseinrichtung 20 vorgegebene Linien bzw. Konturen oder Formen des bekannten Glasprodukts P, um die Lage auf dem Transportband 10 zu erfassen. Beispielsweise können diese vorgegebenen Linien zwei zueinander parallele virtuelle bzw. vorgegebene Linien sein, die durch die Lageerfassungseinrichtung 20 gemessen werden. Es können jedoch genauso Linien an dem Glasoberteil, das heißt, dem Kelch für die genaue Lageerfassung des Glasprodukts P angewandt werden.

Für eine stabile Anordnung der Glasprodukte P werden diese vorzugsweise mit dem Glasoberteil nach unten auf das Transportband 10 gesetzt. Es ist jedoch auch möglich, die Glasprodukte P mit dem Boden auf das Transportband 10 zu setzen. Die Anordnung in umgekehrter Gebrauchsstellung, das heißt mit dem Kelch nach unten, bietet jedoch den Vorteil, daß die vorgegebenen Linien P1, P2 unmittelbar an der Lageerfassungseinrichtung 20 vorbeigeführt werden können, um eine besonders genaue Lageerfassung auf dem Transportband 10 durchzuführen.

Eine nicht gezeigte Berechnungseinrichtung beispielsweise innerhalb eines Computersystems berechnet auf der Grundlage der von der Lageerfassungseinrichtung 20 gemessenen Messdaten Lage und Ausrichtung, d.h. Schiefstellung der Glasprodukte P auf dem Transportband T. Auf der Grundlage der vorgegebenen Glaskontur und der so erhaltenen Lageinformation wird die Bearbeitungsbahn der Laser L, L für jedes Glasprodukt P separat berechnet, um eine Politur einer Bodennaht 6 und einer Stielnaht 7 an dem Glasprodukt P durchzuführen.

Die Bewegungsbahn des Laserstrahls L wird dabei im wesentlichen entlang der Bodennaht 6 und anschließend entlang der Stielnaht 7 verlaufen. Das heißt der Bereich der Bodennaht 6 und der Stielnaht 7 an dem Glasprodukt P wird mittels Laserstrahl L erwärmt und verschmolzen, um einen Politurvorgang durchzuführen, so daß die Nähte 6, 7 an dem fertiggestellten Glasprodukt P nicht mehr sichtbar sind.

Nachdem die Glasprodukte P sich mit kontinuierlicher Geschwindigkeit des Transportbands 10 an der Lasereinrichtung 30 bzw. dem Paar Lasereinrichtungen 30, 30 vorbei bewegen, muß der Laserstrahl L bzw. die Laserstrahlen L, L mit den sich bewegenden Glasprodukten P mit bewegt werden. In anderen Worten beginnt die Laserbestrahlung eines Glasprodukts P bevor das Glasprodukt P an der Lasereinrichtung 30 vorbeitritt, indem der Laserstrahl L bezüglich der Transportrichtung T in im wesentlichen spitzen Winkel auf das Glasprodukt P gerichtet wird.

Dieser Winkel zwischen der Transportrichtung T und dem Laserstrahl L beträgt beispielsweise ca. 30 Grad. Je nach Anwendungsfall kann dieser Winkel jedoch auch zwischen 20 und 60 Grad variieren. Auf Grund der Nachführung des Laserstrahls L wird der Winkel während der Bewegung des Transportbands 10 immer stumpfer bis er einen rechten Winkel in Bezug auf die Transportrichtung T des Transportbands 10 erreicht, wenn das Glasprodukt P die Lasereinrichtung 30 erreicht hat. Danach wird der Winkel wieder spitzer um anschließend wieder ca. 30 Grad bzw. einen spitzen Winkel im Bereich von 20 bis 60 Grad zu erreichen.

Danach wird das nächste Glasprodukt P durch den Laserstrahl L bearbeitet. Aufgrund der kontinuierlichen Bearbeitung der Glasprodukte P während der kontinuierlichen Bewegung des Transportbands 10 kann eine kontinuierliche Bearbeitung von Glasprodukten P erzielt werden. Auf diese Weise können bis zu 60 Gläser in der Minute gelasert werden. Dabei ist ein Wärmeeintrag in das zu bearbeitende Glasprodukt P gezielt auf den zu bearbeitenden Bereich der Bodennaht 6 und der Stielnaht 7 begrenzt. Unnötige Energieverluste und Verformungen im Glas werden vermieden. Da darüber hinaus das Glas nach dem Verpressen noch sehr heiß ist und eine Wärmeabfuhr durch Weglassen von entsprechenden Aufnahmen, Greifern etc. vermieden wird, wird die in dem Glas erzeugte Spannung aufgrund der Laserpolitur minimiert.

Des weiteren wird aufgrund der Politur mittels Laser im heißen Zustand des Glases eine optisch besonders bevorzugte Politur der Glasformnähte erzielt, die am fertigen Glasprodukt P im wesentlichen nicht mehr sichtbar ist.

Die Bewegungseinrichtung 40 der Lasereinrichtung 30 weist vorzugsweise einen Elektromotor, Stellmotor oder dergleichen und ein entsprechendes Getriebe auf, um die Lageerfassungseinrichtung 20 beim Umbau zu verstellen.

Des weiteren hat die Lasereinrichtung 30 vorzugsweise den (nicht gezeigten) Spiegel, um den von dem CO₂ Laser 32 erzeugten Laserstrahl L in der vertikalen Richtung entlang der Stielnaht und Bodennaht 6, 7 des Glasprodukts P zu bewegen. Alternativ kann der Laserstrahl L jedoch wiederum mittels Stellmotor, Getriebe etc. in der vertikalen Richtung bewegt werden. Des weiteren kann als Alternative ein Paar CO₂ Laser 32 an gegenüberliegenden Seiten des Transportbands 10 angeordnet werden, die eine entsprechende Beweglichkeit aufweisen, um den Laserstrahl L entlang der durch die Berechnungseinrichtung berechneten Bewegungsbahn zu bewegen.

Des weiteren kann anstelle eines Lasers 30 oder eines Paars Laser 30, 30 eine Vielzahl von Lasern entlang der Transportrichtung T des Transportbands 10 und/oder vertikal übereinander angeordnet werden.

Eine Ausrichtung der Laservorrichtung 30 mit dem Transportband 10 ist nicht notwendig, weil die Lage des Glasprodukts P auf dem Transportband 10 mittels der optischen Lageerfassungseinrichtung 20 präzise erfaßt werden kann. Die nicht gezeigte Berechnungseinrichtung zum Berechnen der Bewegungsbahn des Laserstrahls L kann die Bewegungsbahn auf der Grundlage der erfaßten Lage des Glasprodukts P und der bekannten und vorgegebenen Kontur des Glasprodukts P berechnen. Dabei ist die Kontur des Glasprodukts P sowie bekannte vorgegebene Linien P1, P2 vorzugsweise als CAD-Datei in der Berechnungseinrichtung abgespeichert. Zusätzlich oder alternativ kann jedoch auch eine vorgegebene Ausrichtung des Glasprodukts auf dem Transportband 10 beispielsweise mittels eines Roboterarms durchgeführt werden.

Obwohl die vorliegende Erfindung anhand der Politur eines Trinkglases beispielhaft erläutert ist, kann das erfindungsgemäße Verfahren sowie die Vorrichtung auch an anderen gepreßten Glasprodukten angewandt werden.

Vorzugsweise ist die Lasereinrichtung 30 mit der Bewegungseinrichtung 40 sowie dem CO₂ Laser 32 in einem gemeinsamen Gestell untergebracht, wie in den Figuren gezeigt ist. Darüber hinaus ist vorzugsweise auch die Lageerfassungseinrichtung 20 an demselben Gestell bzw. Rahmen angebracht. Diese Vorrichtungen und Einrichtungen können jedoch auch separat voneinander je nach Anwendungsfall angeordnet bzw. positioniert werden.

### Bezugszeichenliste

- 1: Stempel
- 2A: zweiteilige Pressform
- 2B: einteilige Pressform
- 3: Ring
- 6: Bodennaht
- 7: Stielnaht
- 10: Transportband
- 20: Lageerfassungseinrichtung
- 30: Lasereinrichtung
- 32: CO₂ Laser
- 40: Bewegungseinrichtung
- L: Laserstrahl
- P: Glasprodukt
- T: Transportrichtung

## Patentansprüche

1. Verfahren zum Polieren von Glasprodukten (P) mit den folgenden Schritten:
Abfahren einer Bahn zum Polieren des Glasprodukts (P);
**gekennzeichnet durch**
Vorgeben einer Kontur des Glasprodukts (P);
Transportieren des Glasprodukts (P) auf einem Transportband (10) und kontinuierliches Bewegen des Transportbands (10), um während der Bewegung des Transportbands (10) eine Vielzahl von auf dem Transportband (10) angeordneten Glasprodukte (P) zu polieren;
Erfassen der Lage des Glasprodukts (P) auf dem Transportband (10);
Berechnen einer Bahn für einen Laserstrahl (L) auf der Grundlage der Kontur des Glasprodukts (P) und der Lage des Glasprodukts (P); und
Abfahren der Bahn mit dem Laserstrahl (L) zum Polieren einer Formnaht (6, 7) des Glasprodukts (P).

2. Verfahren nach Anspruch 1, des weiteren mit dem Schritt des Ausrichtens der Glasprodukte (P) auf dem Transportband (10) derart, dass ein zu polierender Bereich (6, 7) des Glasprodukts (P) in einer horizontalen Ebene in einem von 0° und 180° verschiedenen Winkel, vorzugsweise im wesentlichen rechtwinklig in Bezug auf eine Transportrichtung (T) des Transportbands (10) angeordnet wird.

3. Verfahren nach einem oder mehreren der vorherigen Ansprüche, des weiteren mit dem Schritt des Ladens der Kontur des Glasprodukts (P) in einem Rechner als eine CAD-Datei.

4. Verfahren nach einem oder mehreren der vorherigen Ansprüche, wobei der Schritt des Erfassens der Lage des Glasprodukts (P) des weiteren das Erfassen von mindestens zwei vorgegebenen Linien (P1, P2) an dem Glasprodukt (P) umfaßt.

5. Verfahren nach einem oder mehreren der vorherigen Ansprüche, wobei die Lage des Glasprodukts (P) mittels mindestens eines optischen Sensors, eines Laserscanners oder einer CCD-Kamera erfaßt wird.

6. Verfahren nach einem oder mehreren der vorherigen Ansprüche, des weiteren mit dem Schritt des Bearbeitens des Glasprodukts (P) mit einem Laser (30, 32) von zwei im wesentlichen gegenüberliegenden Seiten im wesentlichen quer zur Transportrichtung (T) des Transportbands (10).

7. Verfahren nach einem oder mehreren der vorherigen Ansprüche, des weiteren mit den Schritten:
Anordnen eines Stielglases (P) auf dem Transportband (10) mit einer Kappe (P3) des Stielglases (P) nach unten; und
Bearbeiten einer Stielnaht (7) und/oder einer Bodennaht (6) des Stielglases (P) mittels Laser (30, 32).

8. Vorrichtung zum Polieren von Glasprodukten (P) mit einer Lasereinrichtung (30, 32) zum Erzeugen eines Laserstrahls (L), um das Glasprodukt (P) zu bearbeiten **gekennzeichnet durch**
einen Speicher zum Speichern einer vorgegebenen Kontur des Glasprodukts (P);
ein Transportband (10) zum Transportieren des Glasprodukts (P), um während der Bewegung des Transportbands (10) eine Vielzahl von auf dem Transportband (10) angeordneten Glasprodukten (P) zu polieren;
eine Lageerfassungseinrichtung (20) zum Erfassen der Lage des Glasprodukts (P) auf dem Transportband (10)
und
einer Berechnungseinrichtung zum Berechnen einer Bahn für den Laserstrahl (L) auf der Grundlage der Kontur des Glasprodukts (P) und der Lage des Glasprodukts (P), um eine Formnaht (6, 7) des Glasprodukts (P) zu polieren.

9. Vorrichtung zum Polieren von Glasprodukten (P) nach Anspruch 8, wobei mindestens ein optischer Sensor, ein Laserscanner oder eine CCD-Kamera als Lageerfassungseinrichtung (20) zum Erfassen der Lage des Glasprodukts (P) vorgesehen ist.

10. Vorrichtung zum Polieren von Glasprodukten (P) nach Anspruch 8 oder 9, wobei zwei Lasereinrichtungen (30, 30) an im wesentlichen gegenüberliegenden Seiten im wesentlichen quer zur Transportrichtung (T) des Transportbands (10) angeordnet sind, um das Glasprodukt (P) gleichzeitig von zwei Seiten zu bearbeiten.

## Claims

1. A method of polishing glass products (P), comprising the following steps:
tracing a path for polishing the glass product (P);
**characterized by**
predetermining a contour of the glass product (P);
conveying the glass product (P) on a conveyor belt (10) and continuously moving the conveyor belt (10) in order to polish a multitude of glass products (P) disposed on the conveyor belt (10) during the movement of the conveyor belt (10);
detecting the position of the glass product (P) on the conveyor belt (10);
calculating a path for a laser beam (L) on the basis of the contour of the glass product (P) an the position of the glass product (P); and
tracing the path with the laser beam (L) for polishing a forming joint (6, 7) of the glass product (P).

2. The method according to claim 1, further comprising the step of aligning the glass products (P) on the conveyor belt (10) such that an area (6, 7) of the glass product (P) to be polished is disposed in a horizontal plane at an angle different from 0° and 180°, preferably substantially at a right angle, with respect to a conveying direction (T) of the conveyor belt (10).

3. The method according to one or more of the preceding claims, further comprising the step of loading the contour of the glass product (P) into a computer as a CAD file.

4. The method according to one or more of the preceding claims, wherein the step of detecting the position of the glass product (P) further comprises detecting at least two predetermined lines (P1, P2) on the glass product (P).

5. The method according to one or more of the preceding claims, wherein the position of the glass product (P) is detected by means of at least one optical sensor, one laser scanner, or one CCD camera.

6. The method according to one or more of the preceding claims, further comprising the step of machining the glass product (P) with a laser (30, 32) from two substantially opposite sides substantially transversely to the conveying direction (T) of the conveyor belt (10).

7. The method according to one or more of the preceding claims, further comprising the steps of:
disposing a stemmed glass (P) on the conveyor belt (10) with a cap (P3) of the stemmed glass (P) facing down; and
machining a stem joint (7) and/or a bottom joint (6) of the stemmed glass (P) by means of laser (30, 32).

8. An apparatus for polishing glass products (P), with a laser device (30, 32) for generating a laser beam (L) to machine the glass product (P),
**characterized by**
a storage for storing a predetermined contour of the glass product (P);
a conveyor belt (10) for conveying the glass product (P) in order to polish a multitude of glass products (P) disposed on the conveyor belt (10) during the movement of the conveyor belt (10);
a position detecting device (20) for detecting the position of the glass product (P) on the conveyor belt (10); and
a calculating device for calculating a path for the laser beam (L) on the basis of the contour of the glass product (P) and the position of the glass product (P) in order to polish a forming joint (6, 7) of the glass product (P).

9. The apparatus for polishing glass products (P) according to claim 8, wherein at least one optical sensor, one laser scanner, or one CCD camera is provided as the position detecting device (20) for detecting the position of the glass product (P).

10. The apparatus for polishing glass products (P) according to claim 8 or 9, wherein two laser devices (30, 30) are disposed at substantially opposite sides substantially transversely to the conveying direction (T) of the conveyor belt (10) in order to machine the glass product (P) from two sides at the same time.

## Revendications

1. Procédé de polissage de produits en verre (P) comprenant les étapes suivantes :
passage du produit en verre (P) par une ligne de polissage ;
**caractérisé par**
la saisie d'un profil du produit en verre (P) ;
le transport du produit en verre (P) sur un tapis roulant (10) et le mouvement continu du tapis roulant (10), afin de réaliser le polissage de nombreux produits en verre (P) placés sur le tapis roulant (10), pendant le déplacement dudit tapis roulant (10) ;
la détection de la position du produit en verre (P) sur le tapis roulant (10) ;
le calcul d'une trajectoire pour un rayon laser (L) sur la base du profil du produit en verre (P) et de la position du produit en verre (P) ; et
le passage sur la trajectoire avec le rayon laser (L) afin de polir un joint de formage (6, 7) du produit en verre (P).

2. Procédé selon la revendication 1, auquel est ajoutée l'étape de l'alignement des produits en verre (P) sur le tapis roulant (10), de telle sorte que la zone à polir (6, 7) du produit en verre (P) soit orientée dans un plan horizontal en décrivant un angle différent de 0° et de 180°, de préférence substantiellement dans un angle perpendiculaire à la direction de transport (T) du tapis roulant (10).

3. Procédé selon l'une quelconque des revendications précédentes, auquel est ajoutée l'étape du chargement du profil du produit en verre (P) dans un calculateur comme un fichier CAO.

4. Procédé selon l'une quelconque des revendications précédentes, dans lequel l'étape de la détection de la position du produit en verre (P) comprend en outre la détection d'au moins deux lignes prédéfinies (P1, P2) du produit en verre (P).

5. Procédé selon l'une quelconque des revendications précédentes, dans lequel la position du produit en verre (P) est détectée moyennant au moins un capteur optique, un scanneur laser ou une caméra CCD.

6. Procédé selon l'une quelconque des revendications précédentes, auquel est ajoutée l'étape du traitement du produit en verre (P) avec un laser (30, 32) de deux côtés substantiellement opposés, substantiellement dans une orientation perpendiculaire par rapport à la direction du transport (T) du tapis roulant (10).

7. Procédé selon une ou plusieurs des revendications précédentes, auquel sont ajoutées les étapes de :
positionnement d'un verre à pied (P) sur le tapis roulant (10) avec un l'ouverture (P3) du verre à pied (P) orienté vers le bas ; et de traitement d'un joint de formage sur le pied (7) et/ou d'un joint de formage sur la base (6) du verre à pied (P) à l'aide d'un laser (30, 32).

8. Dispositif visant à polir les produits en verre (P) avec un appareil à laser (30, 32) destiné à générer un rayon laser (L) afin d'usiner le produit en verre (P)
**caractérisé par**
une mémoire destinée à enregistrer un profil prédéfini du produit en verre (P) ;
un tapis roulant (10) pour le transport du produit en verre (P), afin de réaliser le polissage de nombreux produits en verre (P) placés sur le tapis roulant (10) pendant le déplacement dudit tapis roulant (10) ; un dispositif de détection du positionnement (20) afin de détecter la position du produit en verre (P) sur le tapis roulant (10) et
un dispositif de calcul destiné à calculer une trajectoire du rayon laser (L) sur la base du profil du produit en verre (P) et de la position du produit en verre (P), afin de polir un joint de formage (6, 7) du produit en verre (P).

9. Dispositif destiné au polissage de produits en verre (P) selon la revendication 8, dans lequel au moins un capteur optique, un scanneur laser ou une caméra CCD est prévue comme dispositif de détection du positionnement (20) afin de détecter la position du produit en verre (P).

10. Dispositif de polissage de produits en verre (P) selon la revendication 8 ou 9, dans lequel deux dispositifs laser (30, 30) qui sont placés substantiellement en face l'un de l'autre et substantiellement dans un axe perpendiculaire à la direction de transport (T) du tapis roulant (10), afin de pouvoir usiner le produit en verre (P) en même temps des deux côtés.
